# EUROPÄISCHE PATENTSCHRIFT

(11) **EP 2 829 656 B1**
(45) Veröffentlichungstag und Bekanntmachung des Hinweises auf die Patenterteilung: **05.09.2018**
(21) Anmeldenummer: 14177600.5
(22) Anmeldetag: 18.07.2014
(51) Int. Cl.: E01B 26/00, B61L 1/00

(54) **Vorrichtung zum schwingungsgedämpften Anbringen einer Schalt- oder Sensoreinheit an einer Fahrschiene**
Device for the vibration-damped attachment of a switching or sensor unit to a rail
Dispositif destiné à l'installation guidée par amortissement d'oscillations d'une unité de capteur ou de commutation sur un rail de roulement

(30) Priorität: 22.07.2013 DE 102013012084
(43) Veröffentlichungstag der Anmeldung: 28.01.2015
(73) Patentinhaber: Pintsch Tiefenbach GmbH, 45549 Sprockhövel (DE)
(72) Erfinder: Schlatter, Jörg, 45136 Essen (DE)
(74) Vertreter: Rupprecht, Kay

(56) Entgegenhaltungen:
- EP-A1- 0 374 697
- CH-A- 332 699
- DE-A1- 3 234 651
- US-A- 1 758 712
- US-A- 3 009 746
- US-A- 4 053 034
- US-A1- 2009 289 399

## Beschreibung

Die vorliegende Erfindung betrifft eine Vorrichtung zum schwingungsgedämpften Anbringen einer Schalt- oder Sensoreinheit an einer Fahrschiene.

Unter dem Begriff Schalt- oder Sensoreinheit kann insbesondere ein Schienenschalter zur Zugortung, Richtungserkennung, Geschwindigkeitsmessung, Achszählung oder dergleichen gemeint sein, welcher im Folgenden nur noch als "Einheit" bezeichnet werden soll.

### Stand der Technik

Aus dem Stand der Technik sind bereits Befestigungsvorrichtungen an Fahrschienen, insbesondere zur Befestigung von Schalt- und Messgeräten, bekannt.

Eine Befestigungsvorrichtung der eingangs genannten Art zeigt beispielsweise die Druckschrift DE 3816791 A1. Sie offenbart eine Einrichtung zur Befestigung eines Gehäuses an einer Fahrschiene, dessen Gehäuse über eine Konsole am Schienensteg einer Fahrschiene befestigt ist. Die Fahrschiene wurde zur Anbringung einer Befestigungseinrichtung durchbohrt und anschließend durch einen Schraubmechanismus mit der Konsole verbunden. Die Befestigung des Gehäuses an der Konsole erfolgt über zwei höhenverstellbare Gewindebolzen. Jeder Gewindebolzen ist mit einem Innengewinde zur Aufnahme einer Befestigungsschraube versehen. Die Gewindebolzen sind über in Gewindebohrungen der Konsole eingesetzte Gewindeeinsätze mit schraubenklemmenden Bereichen in der Konsole festgelegt. Zur Höhenverstellung des Gehäuses werden die Befestigungsschrauben gelöst, dann die Gewindebolzen tiefer in die Konsole geschraubt und anschließend die Befestigungsschrauben wieder angezogen.

Die Befestigungsvorrichtung aus DE 3816791 A1 weist neben ihrer Komplexität durch die mehrteilige Ausführung und die aufwendige Montage jedoch erhebliche Nachteile auf und setzt das an der Fahrschiene zu befestigende Gehäuse, insbesondere bei Vorbeifahrt eines Schienenfahrzeugs, erheblichen mechanischen Schwingungen aus.

CH332 699 A offenbart eine Vorrichtung zum schwingungsgedämpften Anbringen einer Sensoreinheit gemäß dem Oberbegriff des Anspruchs 1. Die bisherigen Befestigungsverfahren legen es nahe, besonders gefährdete Bauteile wie elektronische Bauteile und dergleichen mit einer elastischen Masse zu ummanteln. Dies ist fertigungstechnisch aufwändig und eliminiert dennoch nicht die Belastung anderer bruchgefährdeter Bauteile des Radsensors. Zudem sind zusätzliche konstruktive Maßnahmen notwendig, da die Ummantelung zusätzliches Volumen beansprucht. Da das Bauvolumen jedoch vom Anwendungszweck, nämlich der Anbringung unterhalb der Funktionsfläche der Schiene, begrenzt wird, ist es notwendig, den zur Verfügung stehend Raum möglichst effizient zu nutzen. Hierbei wird die Funktionsfläche nach oben durch die horizontale Lauflinie der Peripherie des Spurkranzes eines Schienenfahrzeugrades definiert.

Es ist daher die Aufgabe der vorliegenden Erfindung, eine Schalt- oder Sensor-Einheit schwingungstechnisch von der Schiene zu entkoppeln und eine Befestigungsvorrichtung für einen solchen Sensor an einer Fahrschiene in vorteilhafter Weise dahingehend weiterzubilden, dass sie einfach und kostengünstig herzustellen und zu montieren ist, und dass die Zuverlässigkeit und Haltbarkeit von zu befestigenden Sendern und Messgeräten verbessert und gleichzeitig ein möglichst geringes Bauvolumen beansprucht wird.

### Darstellung der Erfindung

Diese Aufgabe wird erfindungsgemäß durch eine Befestigungsvorrichtung mit den Merkmalen des Anspruchs 1 gelöst. Demnach ist vorgesehen, dass eine Vorrichtung zum schwingungsgedämpften Anbringen einer Schalt- oder Sensoreinheit an einer Fahrschiene ein erstes Befestigungselement aufweist, welches an der Fahrschiene befestigbar ist, ein zweites Befestigungselement zur halternden Aufnahme der Schalt- oder Sensoreinheit, und ein Dämpfungselement, wobei das erste und das zweite Befestigungselement mittels des zwischen ihnen angeordneten Dämpfungselements miteinander verbunden sind.

Dadurch ergibt sich insbesondere der Vorteil, dass für den Lastfall, der Vorbeifahrt eines oder mehrerer Schienenfahrzeuge, eine weitestgehende mechanische Entkopplung zwischen der Fahrschiene und der Schalt- oder Sensor-Einheit erzielt wird. Die in der Einheit befindlichen Bauteile erreichen so eine längere Lebensdauer und können weniger aufwändig gegen Erschütterungen abgesichert werden. Daraus sich ergebender zusätzlicher Bauraum kann entsprechend für weitere technische Lösungen genutzt werden. Gleichzeitig wird die Messgenauigkeit der in der Schalt- oder Sensoreinheit enthaltenen Sensoren im Vergleich mit einer nicht schwingungsgedämpften Befestigungsvorrichtung idealerweise nicht verringert.

Das erste Befestigungselement, welches zur Befestigung an der Fahrschiene dient, kann auf beliebige und in an sich bekannter Weise mittels einer Klammer, einer Verschraubung, oder einer anderen gebräuchlichen, aber wieder lösbaren Methode mit dem Schienenelement verbunden werden. Grundsätzlich ist zwar auch eine Schweißung, eine Nietung, oder eine Klebung denkbar; diese Verbindungsmethoden sind allerdings insofern von Nachteil, dass sie nicht oder nur mit größerem Aufwand wieder lösbar sind, was sich bei einer Aufbereitung des Gleisschotterbettes als Problem darstellen würde, da die Schalt- oder Sensor-Einheiten dann regelmäßig ausgebaut werden müssen. Darüber hinaus bestünde die Gefahr, einen Sensor durch Schweißen thermisch zu zerstören.

Eine Klammerung ist bereits aus der Druckschrift AT 394172 B bekannt, wobei diese lediglich auf den Klemmmechanismus einer Klaue eingeht, die von der Seite her auf den Schienenfuß aufsetzbar und über einen unter der Schiene durchgeführten Zuganker gegen wenigstens einen an der anderen Seite des Schienenfußes angreifenden Spannkopf verspannbar ist. Während eine Klammerung den Vorteil bietet, dass sie leicht und vor allem schnell anzubringen ist und auch nachträglich mit geringem Aufwand versetzt werden kann, ist eine Verschraubung in der Praxis für ortsfeste Anlagen üblich und nach Durchbohren des Schienenstegs leicht montierbar und ebenfalls nachträglich lösbar. Da es sich bei der Schweißung und Nietung um stoffschlüssige Verfahren handelt, bieten diese den Vorteil hoher Festigkeit, sind aber nur mit hohem Aufwand wieder entfernbar. Eine Klebung bietet den Vorteil der schnellen Herstellbarkeit.

Vorteilhafte Weiterbildungen der Erfindung sind in den Unteransprüchen angegeben.

Um eine effektive Entkopplung des ersten und des zweiten Befestigungselements zu erreichen, ist vorgesehen, dass das zweite Befestigungselement wenigstens einen Teil des ersten Befestigungselements umgreift. Dies hat den Vorteil, dass man bei der Wahl des Fertigungsverfahrens und der Ausgestaltung des Übergangs zwischen dem Dämpfungselement und den Befestigungselementen mehr konstruktiven Freiraum erhält. So wäre eine bereits vorgefertigte Baugruppe aus den beiden Befestigungselementen und dem Dämpfungselement vorstellbar, bei der das zweite Befestigungselement geschlossen oder mehrteilig ausgeführt und das Dämpfungselement in geeigneter Weise vorgespannt ist. Grundsätzlich könnte das zweite Befestigungselement auch geschlitzt ausgeführt sein, was sich allerdings fertigungstechnisch als aufwändiger erweist.

Um eine gute Haltewirkung des ersten Befestigungselements an der Fahrschiene zu erreichen, ist am ersten Befestigungselement an dem der Fahrschiene zugewandten Ende ein Flansch vorgesehen, der im eingebauten Zustand an dem Steg der Fahrschiene anliegt. Der Flansch ist in der Regel im Zusammenwirken mit einer Schraubverbindung so dimensioniert, dass für den Lastfall ein ausreichendes Rückstellmoment erzielt wird und eine dauerhafte Verbindung gewährleistet ist. Allerdings ist auch eine Verschweißung oder Verklebung des Flansches mit dem Steg der Fahrschiene denkbar.

In bevorzugter Weise ist vorgesehen, dass das Dämpfungselement im Wesentlichen aus einem elastischen Polymer besteht. Ein derartiges elastisches Polymer ist kostengünstig und leicht herzustellen. Eine für den Lastfall optimierte Elastizität ist so gewählt, dass sie die vom Schienenfahrzeug induzierten, mechanischen Schwingungen kompensiert und von der Einheit fern hält. Ein Polymer ist im Herstellungszustand gut formbar und in der Regel bis zur Polymerisation adhäsiv, wodurch die beiden Befestigungsmittel durch das Dämpfungselement bereits vor dem Anbau an die Fahrschiene zu einer einzigen Baugruppe zusammengefügt werden können. Dies wiederum bietet den Vorteil einer vereinfachten Handhabung und Montage. Im Fall des zu verwendenden Elastomers könnte beispielsweise eine Shore-Härte von 80 Anwendung finden.

Des Weiteren kann vorgesehen sein, dass das Dämpfungselement als Dämpfungsmaterialschicht auf der Mantelfläche des ersten Befestigungselements ausgebildet ist. Eine entsprechende Schicht ist leicht aufzubringen und zu fertigen. Denkbar wären auch ein Dämpfungsmaterialstreifen, der auf seiner Oberfläche mit einer adhäsiven Schicht ausgeführt ist und noch vor Ort an das erste Befestigungselement aufgeklebt werden könnte, bevor ein im Durchmesser größer als der Außendurchmesser des ersten Befestigungselements ausgeführtes zweites Befestigungselement auf das erste Befestigungselement aufgeklebt wird. Eine weitere Herstellungsvariante könnte sich die gute Formbarkeit des Polymers im noch nicht polymerisierten Zustand zunutze machen, um eine Dämpfungsschicht auszubilden, die frei von Lunkern und Bläschen ist und so ein möglichst homogenes Dämpfungsverhalten erzielt. Erfindungsgemäß ist vorgesehen, dass das erste Befestigungselement und das zweite Befestigungselement hülsenförmig ausgebildet ist. Grundsätzlich wäre eine rechteckige Ausprägung denkbar; allerdings ist einer zylindrischen Ausprägung aus Festigkeits- und Materialersparnisgründen der Vorzug zu geben. Um mehr konstruktiven Spielraum bei der Ausgestaltung der Befestigung des ersten Befestigungselements an der Fahrschiene zu erhalten, ist erfindungsgemäß auch vorgesehen, dass das erste Befestigungselement bolzenförmig und das zweite Befestigungselement hülsenförmig ausgebildet ist. In besonders bevorzugter Weise ist vorgesehen, dass das erste Befestigungselement und das zweite Befestigungselement ineinander um eine gemeinsame Symmetrieachse angeordnet sind, und dass das Dämpfungselement zwischen der Außenseite des ersten Befestigungselements und der Innenseite des zweiten Befestigungselements angeordnet ist. Das führt im Ergebnis zu einer koaxialen Anordnung der beiden Befestigungselemente zueinander, wobei das Dämpfungselement bzw. die Dämpfungsschicht ebenfalls wenigstens teilweise koaxial dazwischen liegt.

Mit dem Ziel, die Wartungsfreundlichkeit der erfindungsgemäßen Vorrichtung weiter zu erhöhen, ist einer demontierbaren Vorrichtung der Vorzug zu geben. Entsprechend ist eine bevorzugte Ausprägung vorgesehen, bei der das erste Befestigungselement mittels einer Schraube oder eines Schraubbolzens, welche(r) die Hülse des ersten Befestigungselements sowie eine korrespondierende Bohrung im Steg der Fahrschiene axial durchdringt und an der Fahrschiene befestigbar ist.

Im Weiteren ist vorzugsweise vorgesehen, dass das erste Befestigungselement und das zweite Befestigungselement zylindrisch ausgebildet sind. Diese zylindrischen Bauteile sind leicht zu fertigen und so ist mindestens für das zweite Befestigungselement und die Herstellung einer entsprechenden Hülse ein Press- oder Tiefziehverfahren denkbar.

Um die Anbringung einer Einheit am zweiten Befestigungselement zu gewährleisten und beispielsweise ein Gehäuse auf das zweite Befestigungselement leicht aufstecken zu können, ist erfindungsgemäß vorgesehen, dass an den Enden des zweiten Befestigungselements eine Verdickung ausgebildet ist. Damit wird ein Verkanten bei der Montage vermieden und beispielsweise eine schnellere Montierbarkeit ohne Zuhilfenahme von Gleit- oder Schmiermitteln erreicht. Des Weiteren wird dadurch die vorteilhafte Positionierung des zweiten Befestigungselements innerhalb des Gehäuses erreicht, welches dann durch Vergießen mit einer in ihren mechanischen Eigenschaften auf den Lastfall, der Vorbeifahrt eines oder mehrerer Schienenfahrzeuge, abgestimmten Vergußmasse fixiert wird. Um eine völlige Abdichtung der Verankerung der verbundenen Befestigungselemente mit dem Gehäuse zu erreichen, ist eine Variante denkbar, in der Dichtungskragen, ebenfalls mit unterschiedlichem Durchmesser, an den Verdickungen des zweiten Befestigungselements (Außendurchmesser B und G) montiert werden.

In besonders bevorzugter Weise ist vorgesehen, dass das zweite Befestigungselement zum ersten Befestigungselement im Rahmen der Elastizität des Dämpfungselements horizontal, vertikal und lateral frei beweglich angeordnet ist. Als wesentliches Konstruktionsmerkmal ist bei der Dimensionierung für den bevorzugten Lastfall hierauf zu achten.

Weiter ist vorzugsweise vorgesehen, dass die Vorrichtung mit der Einheit derart verbindbar ist, dass diese seitlich von der Fahrschiene und unterhalb der Bewegungslinie des Spurkranzes eines die Fahrschiene befahrenden Fahrzeugrades angeordnet und von dieser Bewegungslinie beabstandet ist.

Schließlich ist es möglich, dass zwischen dem Flansch und der Schalt- oder Sensoreinheit mindestens eine elastische Dichtungsscheibe angeordnet ist. Der Flansch ist dabei derart dimensioniert, dass er als Widerlager für die Dichtungsscheibe dient und im Zusammenwirken mit der elastischen Dichtungsscheibe in Richtung der Symmetrieachse verlaufende Schwingungen zusätzlich kompensiert. Im Folgenden wird ein bevorzugtes Ausführungsbeispiel der Erfindung anhand einer Zeichnung näher erläutert.

Es zeigt:
- Fig 1.: Einen Längsschnitt der Befestigungsvorrichtung gemäß der Erfindung;
- Fig 2.: Eine perspektivische Darstellung des Ausführungsbeispiels gemäß Fig. 1 mit einem Gehäuse für eine Schalt- oder Sensoreinheit; und
- Fig 3.: Einen Querschnitt durch eine Fahrschiene, durch die Befestigungsvorrichtung und das Gehäuse zur Verdeutlichung einer bevorzugten Anbringung der erfindungsgemäßen Befestigungsvorrichtung an der Fahrschiene.

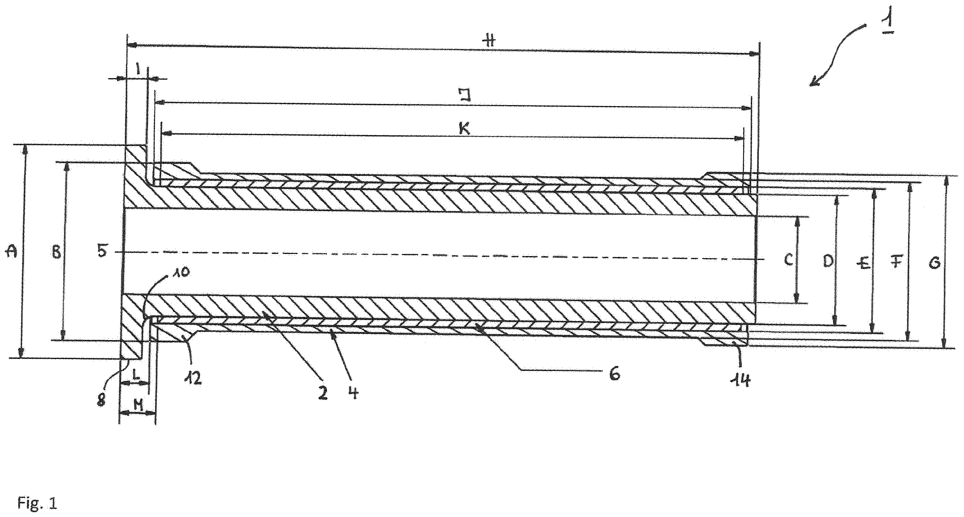

Figur 1 zeigt einen Querschnitt eines Ausführungsbeispiels einer erfindungsgemäßen Vorrichtung 1.

Die Befestigungsvorrichtung 1 weist ein erstes Befestigungselement 2 auf, an derem der Fahrschiene 3 zugewandten Ende ein Flansch 8 ausgebildet ist. Der Flansch hat bei gegebenem Durchmesser A eine Höhe I und weist einen Übergansbereich 10 zwischen Flansch 8 und Außendurchmesser D des ersten Befestigunselements 2 auf.

Koaxial um eine gemeinsame Symmetrieachse 5 und in radialer Richtung außen um das erste Befestigungselement 2 herum ist ein zweites Befestigungselement 4 angeordnet, welches ebenfalls hülsenförmig ausgebildet ist, und das Befestigungselement 2 auf seiner gesamten axialen Länge umgreift.

Ebenfalls koaxial zwischen dem ersten Befestigungselement 2 und dem zweiten Befestigungselement 4 ist ein elastisches, polymeres Dämpfungselement 6 angeordnet. Auch dieses Dämpfungselement 6 umgreift das Befestigungselement 2 auf seiner gesamten axialen Länge. Grundsätzlich wäre auch denkbar, das Dämpfungselement 6 lediglich in Längs- oder Querstreifen auf die Mantelfläche der Hülse des Befestigungselements 2 anzubringen. Allerdings ist einer Aufschmelzung der Dämpfungsschicht zur Bildung des Dämpfungselements 6 der Vorzug zu geben, woraus sich eine durchgängige Funktionsklebefläche der Länge K ergibt. Die Funktionshöhe des Dämpfungselements 6 ergibt sich aus der Differenz der Durchmesser D und E. Die Funktionsklebefläche der Länge K kann sich wie gezeigt auch über die gesamte Länge J des zweiten Befestigungselements 4 erstrecken. Tut sie dies nicht, ergibt sich aus der Differenz der Bemaßungen L und M ein vor dem Übergangsbereich 10 zum Flansch 8 liegender, definierter Freiraum. Der Radius des Übergangsbereichs 10 ist derart dimensioniert, dass, in Abhängigkeit von dem für das erste Befestigungselement 2 gewählte Metall oder Metalllegierung eine Rissbildung im Übergangsbereich 10 ausgeschlossen ist. Generell ist auch denkbar, dass die verwendeten Materialien nichtmetallischen Ursprungs sein können und derart aus einem nicht ferromagnetischen Material ausgebildet sein können, um Interferenzen zwischen der Schalt- oder Sensoreinheit 22 mit dem zu erfassenden Schienenfahrzeug auszuschließen. In jedem Fall ist das Dämpfungselement 6 und die zwischen den Außendurchmessern D und E resultierende Dicke des Dämpfungselements 6 derart gewählt, dass für den Lastfall im Rahmen der Elastizität des Dämpfungselements 6 horizontale, vertikale und laterale Freigängigkeit sichergestellt ist.

Das zweite Befestigungselement weist an seinem dem Flansch 8 und dem der Fahrschiene 3 zugewandten Seite eine Verdickung 12 auf, die dazu geeignet ist das Gehäuse einer Schalt- oder Sensoreinheit 22 aufzunehmen. Diese erste Verdickung 12 ist über den Außendurchmesser B festgelegt und ist im dargestellten Ausführungsbeispiel größer als der Außendurchmesser G der dem Flansch abgewandten Verdickung 14 des zweiten Befestigungselements 4. Diese Realisierung erreicht durch die unterschiedliche Auslegung der Außendurchmesser B und G eine Festlegung der bevorzugten Montagereihenfolge. Gleichermaßen sind Nut- und Federelemente denkbar, die zusätzliche Befestigungsmaterialien einsparen. Im Wesentlichen ist die Außenfläche des zweiten Befestigungselements 4 über den Außendurchmesser F und die Innenfläche des zweiten Befestigungselements 4 über den Innendurchmesser E definiert.

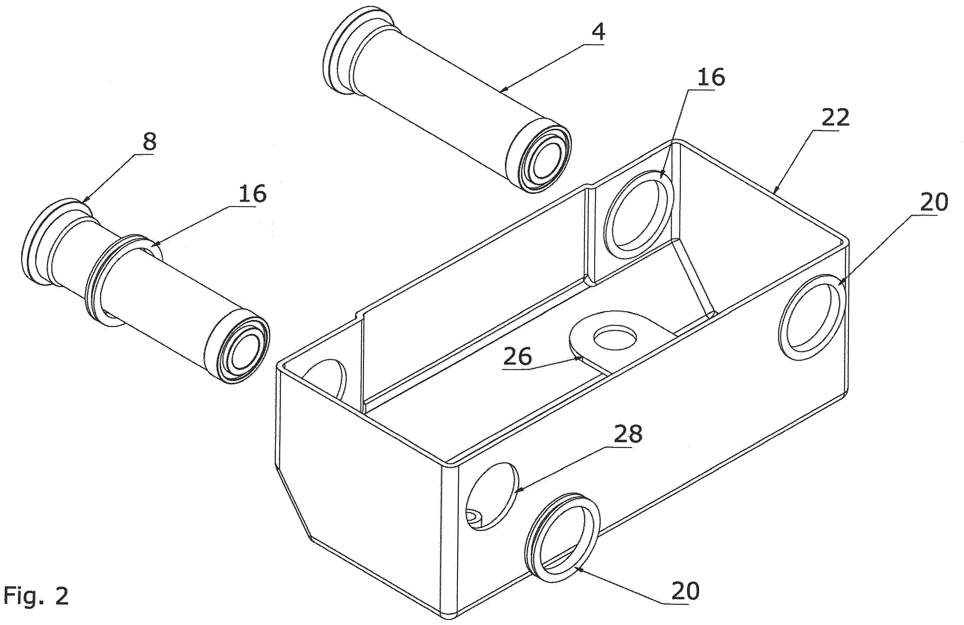

Figur 2 zeigt eine perspektivische Darstellung des Ausführungsbeispiels gemäß Figur 1 mit einem Gehäuse einer Schalt- oder Sensoreinheit.

Darauf ist der Flansch 8 des ersten Befestigungselements 2 und das zweite Befestigungselement 4 zu sehen, welche zu einer gemeinsamen Baugruppe zusammengefügt sind. Die Perspektive zeigt elastische Dichtungsscheiben 16 und 20 unterschiedlichen Durchmessers, die im Zusammenwirken mit dem Flansch 8 oder dem ersten oder zweiten Befestigungselement 2 und 4, und dem Gehäuse der Schalt- oder Sensoreinheit 22 in koaxialer und zum Teil auch in radialer Richtung verlaufende Schwingungen zusätzlich kompensieren. Eine Gehäusebohrung 28, die im Zusammenwirken mit der Verdickung 12 dazu geeignet ist, das Gehäuse einer Schalt- oder Sensoreinheit 22 aufzunehmen. Eine Kabeldurchführung 26 dient als Aufnahme für die Durchführung eines Anschlusskabels der Schalt- oder Sensoreinheit 22, um vor dem anschließenden Fixieren die korrekte Positionierung des Anschlusskabels zu gewährleisten.

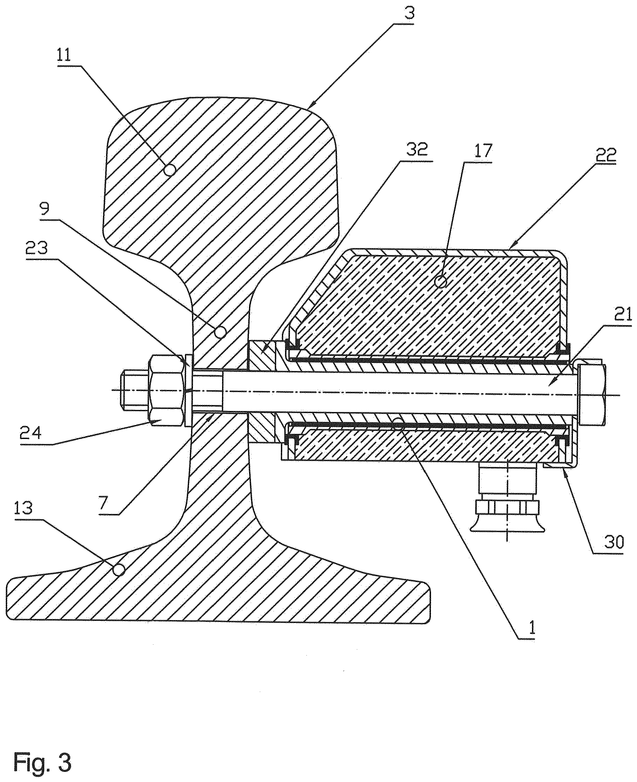

Figur 3 zeigt einen Querschnitt einer Fahrschiene zur Verdeutlichung der Anbringung einer bevorzugten Ausführungsform der Befestigungsvorrichtung.

Die Fahrschiene 3 weist einen Schienenkopf 11, einen Schienenfuß 13 und einen die Beiden verbindenden Schienensteg 9 auf. Der Schienensteg 9 wird in einer für den Betrieb der Schalt- oder Sensoreinheit 22 geeigneten Position von einer Bohrung 7 durchdrungen. Die Befestigungsvorrichtung 1 der Schalt- oder Sensoreinheit 22 wird mit einer Schraubverbindung, bestehend aus einem Schraubenschaft mit Kopf 21, einer Unterlegscheibe 23 und einer Mutter 24, verschraubt. Da Schienenelemente in der Herstellung gewalzt werden, dient ein Nivellierungselement 32 der Angleichung des ersten Befestigungselements an dem Schienensteg. Für die Herstellung der Verschraubung kontert ein Halteblech 30 den Schraubenschaft mit Kopf 21. Eine schützende Vergußmasse 17, bestehend aus einem elastischen, nichtleitenden Material, ummantelt nicht dargestellte elektronische Bauteile und füllt den Innenraum der Schalt- oder Sensoreinheit vollständig aus. Sie dient vor allem dem Schutz vor wechselnden Witterungseinflüssen wie Feuchtigkeit, Druck und Temperatur.

### Bezugszeichenliste

- 1: Befestigungsvorrichtung
- 2: Erstes Befestigungselement
- 3: Fahrschiene
- 4: Zweites Befestigungselement
- 5: Symmetrieachse
- 6: Dämpfungselement
- 7: Bohrung
- 8: Flansch
- 9: Steg
- 10: Übergangsbereich
- 11: Kopf
- 12: Flansch zugewandte Verdickung
- 13: Fuß
- 14: Flansch abgewandte Verdickung
- 16, 20: elastische Dichtungsscheibe
- 17: Vergußmasse
- 21: Schraubenschaft mit Kopf
- 22: Schalt- oder Sensoreinheit
- 23: Unterlegscheibe
- 24: Mutter
- 26: Kabeldurchführung
- 28: Gehäusebohrung
- 30: Halteblech
- 32: Nivellierungselement
- A: Außendurchmesser
- B: Außendurchmesser
- C: Innendurchmesser
- D: Außendurchmesser
- E: Innendurchmesser
- F: Außendurchmesser
- G: Außendurchmesser
- H: Länge des ersten Befestigungselements
- I: Tiefe des Flanschs des ersten Befestigungselements
- J: Länge des zweiten Befestigungselements
- K: Funktionslänge des Dämpfungselements
- L: Abstand zwischen Anschlag des Flansches und zweitem Befestigungselement
- M: Abstand zwischen Funktionslänge und Anschlag des Flansches

## Patentansprüche

1. Vorrichtung zum schwingungsgedämpften Anbringen einer Schalt- oder Sensor-Einheit (22) an einer Fahrschiene (3), mit einem ersten Befestigungselement (2), welches an der Fahrschiene (3) befestigbar ist, mit einem zweiten Befestigungselement (4) zur halternden Aufnahme der Schalt- oder Sensor-Einheit (22), und mit einem Dämpfungselement (6), wobei das erste und das zweite Befestigungselement (2; 4) mittels des zwischen ihnen angeordneten Dämpfungselements (6) miteinander verbunden sind
**dadurch gekennzeichnet, dass**
das erste Befestigungselement (2) bolzenförmig oder hülsenförmig ausgebildet ist und das zweite Befestigungselement (4) hülsenförmig ausgebildet ist, und
wobei an den Enden des zweiten Befestigungselements (2) jeweils eine Verdickung (12, 14) ausgebildet ist und der Außendurchmesser (B) der ersten Verdickung (12) größer ist als der Außendurchmesser (G) der zweiten Verdickung (14).

2. Befestigungsvorrichtung gemäß Anspruch 1,
**dadurch gekennzeichnet, dass**
das zweite Befestigungselement (4) wenigstens einen Teil des ersten Befestigungselements (2) umgreift.

3. Befestigungsvorrichtung gemäß Anspruch 1 oder 2,
**dadurch gekennzeichnet, dass**
das erste Befestigungselement (2) an dem der Fahrschiene (3) zugewandten Ende einen Flansch (8) aufweist, der im eingebauten Zustand an der Fahrschiene (3) anliegt.

4. Befestigungsvorrichtung gemäß einem der Ansprüche 1 bis 3,
**dadurch gekennzeichnet, dass**
das Dämpfungselement (6) im Wesentlichen aus einem elastischen Polymer besteht.

5. Befestigungsvorrichtung gemäß einem der Ansprüche 1 bis 4,
**dadurch gekennzeichnet, dass**
das Dämpfungselement (6) als Dämpfungsschicht auf der Mantelfläche des ersten Befestigungselements (2) ausgebildet ist.

6. Befestigungsvorrichtung gemäß einem der vorhergehenden Ansprüche,
**dadurch gekennzeichnet, dass**
das erste Befestigungselement (2) und das zweite Befestigungselement (4) ineinander um eine gemeinsame Symmetrieachse (5) angeordnet sind und das Dämpfungselement (6) zwischen der Außenseite des ersten Befestigungselements (2) und der Innenseite des zweiten Befestigungselements (4) angeordnet ist.

7. Befestigungsvorrichtung gemäß einem der vorhergehenden Ansprüche ,
**dadurch gekennzeichnet, dass**
das erste Befestigungselement (2) mittels einer Schraube oder eines Schraubbolzens, welche(r) die Hülse des ersten Befestigungselements (2) sowie eine korrespondierende Bohrung (7) im Steg (9) der Fahrschiene axial durchdringt, an der Fahrschiene (3) befestigbar ist.

8. Befestigungsvorrichtung gemäß einem der vorhergehenden Ansprüche,
**dadurch gekennzeichnet, dass**
das erste Befestigungselement (2) und das zweite Befestigungselement (4) zylindrisch ausgebildet sind.

9. Befestigungsvorrichtung gemäß einem der vorhergehenden Ansprüche,
**dadurch gekennzeichnet, dass**
das zweite Befestigungselement (4) zum ersten Befestigungselement (2) im Rahmen der Elastizität des Dämpfungselements (6) horizontal, vertikal und lateral frei beweglich angeordnet ist.

10. Befestigungsvorrichtung gemäß einem der vorhergehenden Ansprüche,
**dadurch gekennzeichnet, dass**
die Vorrichtung mit der Schalt- oder Sensoreinheit (22) derart verbindbar ist, dass die Schalt- oder Sensoreinheit (22) seitlich von der Fahrschiene (3) und unterhalb der Bewegungslinie des Spurkranzes eines die Fahrschiene (3) befahrenden Fahrzeugrades angeordnet und von dieser Bewegungslinie beabstandet ist.

11. Befestigungsvorrichtung gemäß einem der vorhergehenden Ansprüche,
**dadurch gekennzeichnet, dass**
zwischen dem Flansch (8) und der Schalt- oder Sensoreinheit (22) mindestens eine elastische Dichtungsscheibe (16, 20) angeordnet ist.

## Claims

1. A device for the vibration-damped attachment of a switching or sensor unit (22) to a rail (3) having a first fastening element (2) which is attachable to the rail (3), a second fastening element (4) for securely receiving the switching or sensor unit (22), and a damping element (6), wherein the first and the second fastening element (2; 4) are connected by means of the damping element (6) arranged between them,
**characterized in that**
the first fastening element (2) is of bolt-shaped configuration and the second fastening element (4) is of sleeve-shaped configuration, and wherein a thickening (12, 14) is formed on the respective ends of the second fastening element (2) and the outer diameter (B) of the first thickening (12) is larger than the outer diameter (G) of the second thickening (14).

2. The fastening device according to claim 1,
**characterized in that**
the second fastening element (4) engages around at least a portion of the first fastening element (2).

3. The fastening device according to claim 1 or 2,
**characterized in that**
the first fastening element (2) comprises a flange (8) on the end facing the rail (3) which abuts against the rail (3) in the installed state.

4. The fastening device according to one of claims 1 to 3,
**characterized in that**
the damping element (6) substantially consists of an elastic polymer.

5. The fastening device according to one of claims 1 to 4,
**characterized in that**
the damping element (6) is designed as a damping layer on the lateral surface of the first fastening element (2).

6. The fastening device according to one of the preceding claims,
**characterized in that**
the first fastening element (2) and the second fastening element (4) are arranged one inside the other about a common axis of symmetry (5) and the damping element (6) is arranged between the outer side of the first fastening element (2) and the inner side of the second fastening element (4).

7. The fastening device according to one of the preceding claims,
**characterized in that**
the first fastening element (2) is attachable to the rail (3) by means of a screw or a bolt which axially penetrates the sleeve of the first fastening element (2) as well as a corresponding bore (7) in the bar (9) of the rail.

8. The fastening device according to one of the preceding claims,
**characterized in that**
the first fastening element (2) and the second fastening element (4) are of cylindrical configuration.

9. The fastening device according to one of the preceding claims,
**characterized in that**
the second fastening element (4) is disposed so as to be freely movable horizontally, vertically and laterally relative to the first fastening element (2) within the range of the elasticity of the damping element (6).

10. The fastening device according to one of the preceding claims,
**characterized in that**
the device with the switching or sensor unit (22) is connectable such that the switching or sensor unit (22) is arranged to the side of the rail (3) and below the line of movement of the wheel flange of a vehicle wheel traveling on the rail (3) and disposed at a distance from said line of movement.

11. The fastening device according to one of the preceding claims,
**characterized in that**
at least one elastic gasket (16, 20) is arranged between the flange (8) and the switching or sensor unit (22).

## Revendications

1. Dispositif pour le montage antivibratoire d'un ensemble commutateur ou capteur (22) sur un rail de roulement (3), comportant un premier élément de fixation (2) qui est susceptible d'être fixé sur le rail de roulement (3), un second élément de fixation (4) pour recevoir l'ensemble commutateur ou capteur (22) en le retenant, et un élément amortisseur (6), le premier et le second élément de fixation (2 ; 4) étant reliés l'un à l'autre au moyen de l'élément amortisseur (6) agencé entre eux,
**caractérisé en ce que**
le premier élément de fixation (2) est réalisé en forme de goujon ou de douille et le second élément de fixation (4) est réalisé en forme de douille, et
un épaississement (12, 14) est réalisé respectivement aux extrémités du second élément de fixation (2) et le diamètre extérieur (B) du premier épaississement (12) est supérieur au diamètre extérieur (G) du second épaississement (14).

2. Dispositif de fixation selon la revendication 1,
**caractérisé en ce que**
le second élément de fixation (4) enserre au moins une partie du premier élément de fixation (2).

3. Dispositif de fixation selon la revendication 1 ou 2,
**caractérisé en ce que**
à l'extrémité tournée vers le rail de roulement (3), le premier élément de fixation (2) présente une bride (8) qui, dans l'état intégré, est en appui contre le rail de roulement (3).

4. Dispositif de fixation selon l'une des revendications 1 à 3,
**caractérisé en ce que**
l'élément amortisseur (6) est constitué sensiblement en un polymère élastique.

5. Dispositif de fixation selon l'une des revendications 1 à 4,
**caractérisé en ce que**
l'élément amortisseur (6) est réalisé sous forme de couche d'amortissement sur la surface enveloppe du premier élément de fixation (2).

6. Dispositif de fixation selon l'une des revendications précédentes,
**caractérisé en ce que**
le premier élément de fixation (2) et le second élément de fixation (4) sont agencés l'un dans l'autre autour d'un axe de symétrie commun (5), et l'élément amortisseur (6) est agencé entre la face extérieure du premier élément de fixation (2) et la face intérieure du second élément de fixation (4).

7. Dispositif de fixation selon l'une des revendications précédentes,
**caractérisé en ce que**
le premier élément de fixation (2) est susceptible d'être fixé au rail de roulement au moyen d'une vis ou d'un boulon qui traverse axialement la douille du premier élément de fixation (2) ainsi qu'un perçage correspondant (7) dans l'âme (9) du rail de roulement.

8. Dispositif de fixation selon l'une des revendications précédentes,
**caractérisé en ce que**
le premier élément de fixation (2) et le second élément de fixation (4) sont réalisés cylindriques.

9. Dispositif de fixation selon l'une des revendications précédentes,
**caractérisé en ce que**
le second élément de fixation (4) est agencé de façon librement mobile dans le sens horizontal, vertical et latéral par rapport au premier élément de fixation (2) dans les limites de l'élasticité de l'élément amortisseur (6).

10. Dispositif de fixation selon l'une des revendications précédentes,
**caractérisé en ce que**
le dispositif est susceptible d'être relié à l'ensemble commutateur ou capteur (22) de telle sorte que l'ensemble commutateur ou capteur (22) est agencé latéralement à côté du rail de roulement (3) et au-dessous de la ligne de mouvement du boudin d'une roue de véhicule roulant sur le rail de roulement (3) et est espacé de cette ligne de mouvement.

11. Dispositif de fixation selon l'une des revendications précédentes,
**caractérisé en ce que**
au moins une rondelle d'étanchéité élastique (16, 20) est agencée entre la bride (8) et l'ensemble commutateur ou capteur (22).
